Europäisches Patentamt

European Patent Office

Office européen des brevets

(19)

(11) Publication number: **0 356 125**
**A2**

(12) # EUROPEAN PATENT APPLICATION

(21) Application number: **89308305.5**

(22) Date of filing: **16.08.89**

(51) Int. Cl.⁵: **G 06 K 19/06**

(30) Priority: **16.08.88 GB 8819481**

(43) Date of publication of application:
**28.02.90 Bulletin 90/09**

(84) Designated Contracting States: **DE FR NL**

(71) Applicant: **PLUS 5 ENGINEERING LIMITED**
**Crowborough Hill**
**Crowborough East Sussex TN6 2EG (GB)**

(72) Inventor: **Thornton, Kenneth Roy**
**Pippins High Street**
**Ninfield East Sussex TN33 NJR (GB)**

**Ainger, Phillip John**
**8 Parkview Court Poplar Grove**
**Woking Surrey GU22 7SE (GB)**

(74) Representative: **Needle, Jacqueline et al**
**W.H. BECK, GREENER & CO 7 Stone Buildings Lincoln's Inn**
**London WC2A 3SZ (GB)**

(54) **Portable memory device.**

(57) A portable memory device which is sufficiently light and suitably sized such that it can be carried easily by a person is provided. For example, the complete device may be shaped and sized substantially similarly to an identification label. The portable memory device includes an electrical circuit having a microprocessor (22) and electronic memory (26,30). Two metal plates (12) enclose and are electrically connected to said electrical circuit for the application of power thereto. Optical coupling means (36, 38) for transmitting and receiving optical signals are connected to said microprocessor (22).

The memory (26, 30) may store personal financial and/or banking information such that the device may be used, in conjunction with an appropriate reading device, as a credit or other banking card. Additionally, and/or alternatively, personal identification and/or medical information may be stored in the memory such that the memory device may be used to enable identified persons access to secured installations. The device can also be used by medical services, for example to check for medical conditions and allergies when treating accident and emergency victims. The portable memory device could also be utilised to store credits for telephones, transport systems and other services.

FIG.1.

FIG.5.

EP 0 356 125 A2

Description

# PORTABLE MEMORY DEVICE

The present invention relates to a portable memory device and to an electronic personal identification label.

According to a first aspect of the present invention there is provided a portable memory device comprising an electrical circuit including an electronic memory, two metal plates enclosing and being electrically connected to said electrical circuit, and optical coupling means for transmitting optical signals, which optical signals are representative of information derived from said electrical circuit.

The portable memory device is preferably sufficiently light and suitably sized such that it can be carried easily by a person. For example, the complete device may be shaped and sized substantially similarly to a credit card or to an identification label.

The memory of the device may store personal financial and/or banking information such that the device may be used, in conjunction with an appropriate reading device, as a credit or other banking card. Additionally, and/or alternatively, personal identification and/or medical information may be stored in the memory. Thus, the memory device may be used to enable identified persons access to secured installations.

It could also be used by medical services, for example to check for drug allegies, conditions such as diabetes and the like when treating accident and emergency victims.

A portable memory device of the invention could also be utilised to store credits for telephones, transport systems and other services. The memory device would be inserted into an appropriate reading device which would enable access to the particular service and also cancel an appropriate number of the stored credits.

In all of the applications for the portable memory device outlined above two way communication between the device and the appropriate reading device therefor is preferred. Accordingly, the memory device is preferably provided with further optical coupling means responsive to optical signals and arranged to couple information derived from said optical signals to said electrical circuit. In a preferred embodiment said further optical coupling means comprise one or more infrared receivers, and said optical coupling means comprise one or more infrared transmitters, such as light emitting diodes (LED's).

In a preferred embodiment said electrical circuit includes a central processing unit. Furthermore, the electronic memory preferably comprises both random access memory (RAM) and read only memory (ROM) which may be, or may include EPROM or fusible or masked ROM and will also preferably comprise electrically alterable memory such as EEROM. In a preferred embodiment the memory device is provided with 1 to 2K ROM, 8 to 16K EEROM and 1K or less of RAM.

The electrical circuit is preferably configured as a printed circuit board mounted in a substantially planar body. The two metal plates extend substantially parallel to one another and extend along the top and bottom surfaces of the body. This body is preferably made of a plastics material which is transparent to infrared radiation.

Preferably orientation means are provided on the device to ensure it is not symmetrical such that it can only be inserted in an appropriate reading device in one orientation. For example, said orientation means may comprise a recess or projection extending along one dimension of the device. The provision of such orientation means is particularly important where a DC supply is to be connected to said metal plates.

Where the portable memory device is to be used as a personal identification label, it is preferably shaped such that it does not have sharp corners so that it can be worn, for example about the neck, without discomfort.

According to a further aspect of the present invention there is provided a portable memory device comprising an electrical circuit including an electronic memory, two metal plates enclosing and being electrically connected to said electrical circuit, and optical coupling means responsive to optical signals and arranged to couple information derived from said optical signals to said electrical circuit.

The invention also extends to an electronic personal identification label which is sufficiently light and suitably sized to be carried about the person, said label incorporating an electronic memory in which personal identification data is stored.

In a preferred embodiment, identification information is also visibly written on the label.

Preferably, the electronic personal identification label is configured as a portable memory device as defined above.

An embodiment of the present invention will hereinafter be defined, by way of example, with reference to the accompanying drawings, in which:

Figure 1 shows a plan view of an electronic personal identification label of the invention;

Figure 2 shows a side elevation of the label of Figure 1;

Figure 3 shows an end view of the label of Figures 1 and 2,

Figure 4 shows a section taken along the line X-X of Figure 2, and

Figure 5 shows a block diagram of an electrical circuit of the electronic personal identification label.

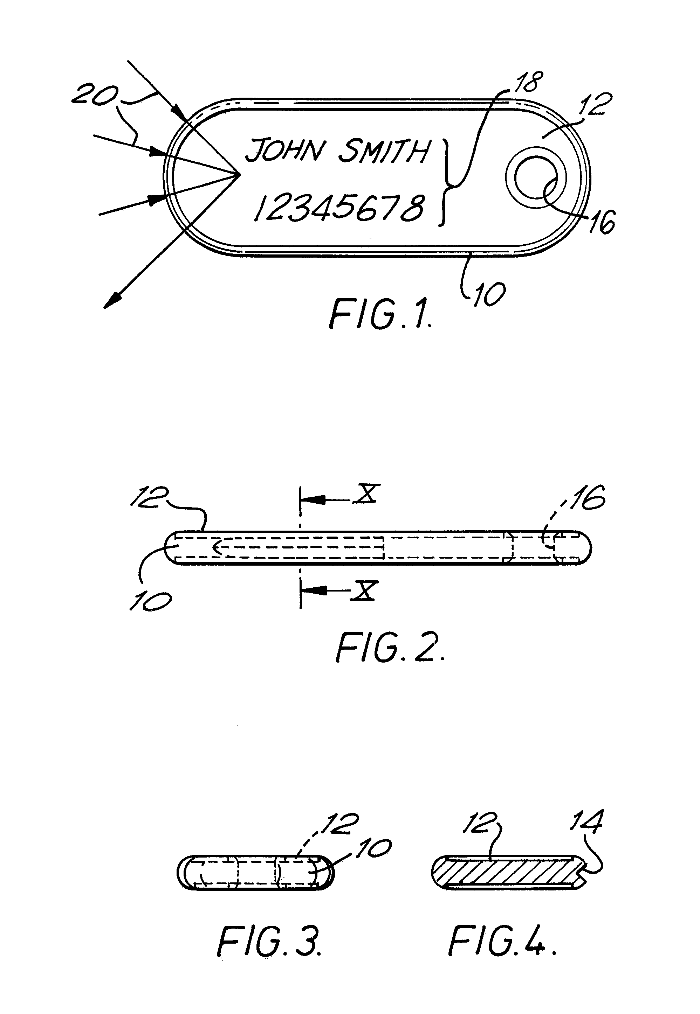

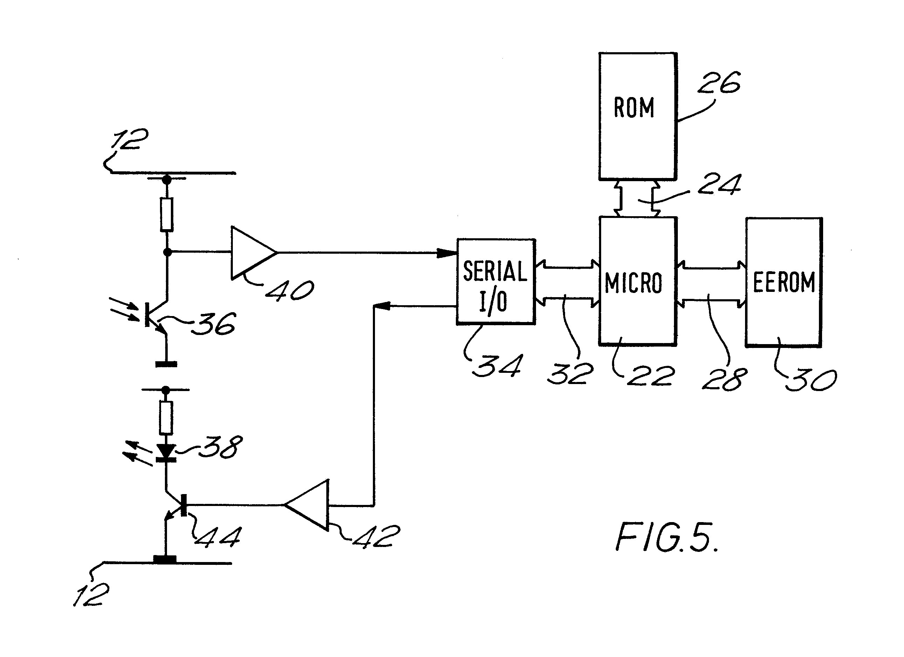

Figures 1 and 2 show one embodiment of an electronic personal identification label of the present invention. This label comprises a plastics material body 10 in which a printed circuit board (not visible) is supported. It will be seen that the body 10 is planar but has a substantially elliptical perimeter shape. A pair of spaced, substantially parallel extending metal plates 12 are supported on the body 10 to extend along the top and bottom surfaces thereof. Preferably, these plates 12 are made of stainless steel. Each of these plates 12 is electrically connected to an electrical circuit, shown in Figure 5, carried by the printed circuit board. It will therefore be appreciated that if electrical power is connected to the plates 12, electrical power will be similarly connected to the electrical circuit on the printed circuit board. Preferably, DC power is arranged to be applied to the two plates 12, and the electrical circuit is arranged to be powered by a DC supply.

The electrical circuit carried by the printed circuit board (not shown) comprises a central processing unit (CPU) communicating with and arranged to control electronic memory. In the embodiment illustrated, the CPU is implemented by a microprocessor 22 which is linked by way of a bus 24 to a first memory 26, and by way of a bus 28 to a second memory 30. The first memory 26 is made up of 1 to 2K ROM, whilst the second memory 30 comprises 8 to 16K EEROM. In addition, the microprocessor 22 may include 1K or less of RAM. For example. 256 bytes of RAM may be produced.

A bus 32 communicates the microprocessor 22 with a serial input/output interface 34. Data is arranged to be communicated to and from the electrical circuit by way of optical coupling means and the input/output interface 34. In the illustrated embodiment, the optical coupling means are carried within the body 10 and are responsive to infrared radiation. The optical coupling means comprise an infrared receiver in the form of at least one transistor 36, and an infrared transmitter in the form of at least one light emitting diode (LED) 38. The infrared receiver transistor 36 is connected to said interface 34 by way of an amplifier 40, and the interface 34 is connected to said transmitter 38 by way of an amplifier 42 and a transistor 44. The paths 20 of the input and output infrared beams are indicated on Figure 1.

Because the electrical circuit is arranged to be powered by DC applied to the plates 12 it is necessary to ensure that this is connected to the plates 12 with the correct polarity. Accordingly, a recess 14 is formed in the body 10 to extend longitudinally along at least part of one side only of the body 10.

It will be appreciated that in use the personal identification label will be inserted into an appropriate reading device (not shown), and the recess 14 ensures that the label can only be so inserted in the correct orientation. With the label so inserted the reading device will apply DC power to the plates 12 to power the electrical circuit, and will have appropriate optical coupling means to enable the reading device and the label to communicate.

It is proposed that the label shown in Figures 1 to 4 should be worn by a person, for example around the neck. It is therefore constructed to be sufficiently light and suitably sized so that it can be worn with comfort. The substantially elliptical shape is adopted to ensure that there are no hard edges which would cause discomfort. A bore 16 is formed to extend through the plates 12 and the body 10 through which a chain (not shown) may be threaded.

The identification label is preferably provided with visible identification information 18 in writing on one or both of the plates 12 as can be seen in Figure 1.

Where the label is to be used as a personal identification label, information relating to the person identified at 18 is stored within the memory of the electrical circuit. Because the electrical circuit is arranged to be powered by DC it is not responsive to transmitted alternating signals. This makes the label particularly useful for personnel who work in an environment which includes a large number of radio signals or similar transmissions.

It will be appreciated that variations in and modifications to the invention as described above may be made within the scope of this application.

## Claims

1. A portable memory device comprising an electrical circuit including an electronic memory (26, 28), two metal plates (12) enclosing and being electrically connected to said electrical circuit, and optical coupling means (38) for transmitting optical signals, which optical signals are representative of information derived from said electrical circuit.

2. A portable memory device as claimed in claim 1, wherein the device is sufficiently light and suitably sized such that it can be carried easily by a person.

3. A portable memory device as claimed in claim 1 or 2, wherein stored in said memory is personal financial and/or banking information; and/or personal identification and/or medical information; and/or credits for telephones, transport systems and other services.

4. A portable memory device as claimed in any preceding claim, further comprising further optical coupling means (36) responsive to optical signals and arranged to couple information derived from said optical signals to said electrical circuit.

5. A portable memory device as claimed in claim 4, wherein said further optical coupling means comprise one or more infrared receivers (36), and said optical coupling means comprise one or more infrared transmitters (38), such as light emitting diodes (LED's).

6. A portable memory device as claimed in any preceding claim, wherein said electrical circuit includes a central processing unit (22), and the electronic memory (26, 30) comprises read only memory (ROM).

7. A portable memory device as claimed in claim 6, wherein said ROM is or includes EPROM or fusible or masked ROM and preferably comprises EEROM, for example, wherein said electronic memory comprises 1 to 2K ROM, 8 to 16K EEROM and 1K or less of RAM.

8. A portable memory device as claimed in any preceding claim, wherein said electrical circuit is configured as a printed circuit board mounted in a substantially planar body (10), and said two metal plates (12) extend substantially parallel to one another and extend along the top and bottom surfaces of the body.

9. A portable memory device as claimed in claim 8, wherein said body (10) is made of a plastics material which is transparent to infrared radiation.

10. A portable memory device as claimed in any preceding claim, wherein orientation means (14) are provided on the device to ensure it is not symmetrical such that it can only be inserted in an appropriate reading device in one orientation.

11. A portable memory device as claimed in claim 10, wherein said orientation means comprise a recess (14) or projection extending along one dimension of the device.

12. A portable memory device comprising an electrical circuit including an electronic memory (26, 28), two metal plates (12) enclosing and being electrically connected to said electrical circuit, and optical coupling means (36) responsive to optical signals and arranged to couple information derived from said optical signals to said electrical circuit.

13. An electronic personal identification label which is sufficiently light and suitably sized to be carried about the person, said label incorporating an electronic memory (26, 28) in which personal identification data is stored.

14. An electronic personal identification label as claimed in claim 13, wherein identification information is also provided visibly on the label.

15. An electronic personal identification label as claimed in claim 13 or 14 configured as a portable memory device as claimed in any of claims 1 to 12.

JOHN SMITH
12345678

FIG.1.

FIG. 2.

FIG. 3.

FIG.4.

ROM — 26

24

EEROM — 30

28

MICRO — 22

32

SERIAL I/O — 34

40

42

36

38

44

12

12

*FIG.5.*